# EUROPÄISCHE PATENTSCHRIFT

(11) **EP 1 043 589 B1**
(45) Veröffentlichungstag und Bekanntmachung des Hinweises auf die Patenterteilung: **17.11.2004**
(21) Anmeldenummer: 00106855.0
(22) Anmeldetag: 30.03.2000
(51) Int. Cl.: G01P 3/48, H02P 6/16

(54) **Verfahren und Vorrichtung zur Messung der Drehzahl eines Gleichstrom-Kommutatormotors**
Method and device for determining the rotational speed of a DC commutator motor
Procédé et dispositif pour la détermination de la vitesse de rotation d'un moteur à commutateur à courant continu

(30) Priorität: 08.04.1999 DE 19915877
(43) Veröffentlichungstag der Anmeldung: 11.10.2000
(73) Patentinhaber: HKR Climatec GmbH, 74653 Künzelsau (DE)
(72) Erfinder: Oechsener, Norbert Paul, Dipl.-Ing. FH, 74747 Ravenstein (DE); Bass, Wolfgang, Dipl.-Ing. FH, 74626 Bretzfeld-Adolzfurt (DE)
(74) Vertreter: Nöth, Heinz, Dipl.-Phys.

(56) Entgegenhaltungen:
- DE-A- 3 910 347
- DE-A- 3 935 585
- GB-A- 2 142 149
- US-A- 4 924 166
- BURTH M ET AL: "DIAGNOSE VON UNIVERSALMOTOREN MIT HILFE DES STROM- UND VIBRATIONSSIGNALS (TEIL 2)" , TECHNISCHES MESSEN TM,DE,R.OLDENBOURG VERLAG. MUNCHEN, VOL. 64, NR. 2, PAGE(S) 47-53 XP000692146 ISSN: 0171-8096 * Zusammenfassung; Abbildungen 2,4 *
- BIRK M: "UNKONVENTIONELLE DREHZAHLMESSUNG UND -REGELUNG BEI GLEICHSTROMMOTOREN. SWITCHED-CAPACITOR-FILTER BESTIMMT DREHZAHL AUSDER WELLIGKEIT" , ELEKTRONIK,DE,FRANZIS VERLAG GMBH. MUNCHEN, VOL. 33, NR. 25, PAGE(S) 71-72 XP002029304 ISSN: 0013-5658 * das ganze Dokument *

## Beschreibung

Die Erfindung betrifft ein Verfahren und eine Vorrichtung zur Messung der Drehzahl eines Gleichstrom-Kommutatormotors

In US-A-4,924,166 werden zur Bestimmung jeweiliger Positionen von Motor-getriebenen Teilen elektrische Schwankungssignale, welche die Kommutierungswechsel des Motors enthalten, in Phase und Frequenz mit einem Oszillatorausgangssignal synchronisiert. Die Synchronisation erfolgt in gesteuerten Zeitvorgaben, wobei zur Steuerung der Zeitvorgaben ein weiterer Oszillator vorgesehen ist, dessen Frequenz ungefähr auf die Umlauffrequenz des Motors eingestellt ist.

Bekannt ist ferner, die Schwankungen im Motorstrom auszuwerten (DE 16 73 364). Dabei werden die durch den Stromwechsel von einer Kollektorlamelle zur nächsten Lamelle verursachten Stromschwankungen, gegebenenfalls nach Verstärkung, einer Impulsformerstufe zugeführt, an deren Ausgang ein Meßgerät zur Anzeige der Drehzahl angeschlossen ist. Aus der DD 254 254 A1 ist ein Verfahren bekannt, bei dem die Drehzahl durch spannungsgesteuerte Filter ausgewertet wird. Bei den bekannten Verfahren und Vorrichtungen ist es erforderlich, die Komponenten der Drehzahlmeßeinrichtung an die jeweiligen Motore, an denen die Drehzahlmessung durchzuführen ist, anzupassen, um Toleranzunterschiede auszugleichen. Ferner ergeben sich nach längerer Betriebsdauer Änderungen am Motor, beispielsweise in den Lagern, und andere verschleißbedingte Änderungen, welche die Drehzahlmessung beeinflussen.

Aus der DE 197 29 238 C1 ist es bekannt, zur Ermittlung der Drehzahl eines Gleichstrommotors, parallel zur Erfassung der Welligkeit (Ripple) des Motorstroms, aus einem Motorzustandsmodel, dem die elektromechanischen Motorgleichungen zugrundeliegen, aus Motorstrom und Motorspannung einen zulässigen Soll-Zeitbereich zu bestimmen und die Zeitpunkte der Kommutierung nur dann bei der Auswertung zu berücksichtigen, wenn diese in diesem Soll-Zeitbereich liegen und falls innerhalb dieses Soll-Zeitbereichs keine Welligkeit einer Kommutierung zugeordnet werden kann, einen wahrscheinlichen Kommutierungszeitpunkt aus dem Motorzustandsmodel zu extrapolieren.

Aufgabe der Erfindung ist es, ein Verfahren und eine Vorrichtung der eingangs genannten Art zu schaffen, welche bei beliebigen Typen von Gleichstrom-Kommutatormotoren einsetzbar sind und über eine lange Betriebsdauer hin eine genaue Drezahlbestimmung gewährleisten.

Diese Aufgabe wird erfindungsgemäß beim Verfahren durch die Merkmale des Patentanspruches 1 und bei der Vorrichtung durch die Merkmale des Patentanspruches 9 gelöst. In den Unterahsprüchen sind Weiterbildungen der Erfindung angegeben.

In bevorzugter Weise werden vor der Auswertung aus dem vom Motor abgeleiteten Eingangsschwankungssignal z. B. des Motorstroms oder der am Motor abgenommenen Spannung hochfrequente Anteile und gegebenenfalls Gleichstromanteile entfernt.

Ferner können die Amplituden des elektrischen Schwankungssignals, insbesondere des Stromschwankungssignals auf ein konstantes Maximum geregelt und die Phasenlagen des so geregelten Signals in aufeinanderfolgenden Zeitvorgaben erfaßt werden. In Abhängigkeit von dieser Phasenerfassung werden die von einem Oszillator bestimmten Zeitvorgaben phasengenau synchronisiert, wobei aus der Frequenz der synchronisierten Zeitvorgaben die Drehzahl bestimmt wird. Hierzu werden während der Zeitvorgaben immer bestimmte Bereiche des elektrischen Schwankungssignals, z. B. Maximum, bestimmter Bereich der Anstiegsflanke oder der Abstiegsflanke und in bevorzugter Weise der jeweilige Nulldurchgang des Signals phasenmäßig erfaßt. Es können während einer Ankerumdrehung sich ergebende Signale, insbesondere ein aus den Kommutatorwechseln sich ergebendes Signal phasenmäßig, insbesondere im Hinblick auf die Nulldurchgänge, d. h. die Kommutatorwechsel phasenmäßig erfaßt werden und für die Synchronisation der Zeitvorgaben und insbesondere der die Zeitvorgaben bestimmenden Frequenz des Oszillators ausgenützt werden. Die Synchronisation kann durch Auswertung der jeweiligen Kommutatorwechsel oder auch nach der Umfangsfrequenz, die sich aus der Motordrehung ergibt, durchgeführt werden.

Die Zeitpunkte bzw. Zeitvorgaben, zu denen die Phasenerfassung erfolgt, kann in Abhängigkeit von aus der Motorspannung und dem Motorstrom gewonnenen Motorsignalen, z. B. insbesondere der Motor-EMK, grob bzw. ungefähr (ca. 15% Drehzahlabweichung) bestimmt werden. Durch die Erfindung ist somit gewährleistet, daß die Frequenz der Zeitvorgaben auf Schwankungen des Motorstroms und/oder der am Motor abgenommenen Spannung synchronisiert ist. Die Genauigkeit der hieraus abgeleiteten Drehzahlbestimmung wird daher von Toleranzen im Motoraufbau, insbesonder im mechanischen Aufbau und durch Änderungen, die sich in diesem Aufbau ergeben, wenig beeinflußt.

Aus der Phasenerfassung bei der Auswertung der Amplituden des elektrischen Schwankungssignals, insbesondere Stromschwankungssignals kann ferner eine Motordiagnose abgeleitet werden. Wenn ein klares Erkennen der Kommutatorwechsel nicht mehr ohne weiteres möglich ist, ist dies beispielsweise ein Anzeichen für Verschleiß mechanischer Konstruktionselemente des Motors oder eine Verunreinigung der Kommutatorzwischenräume. Für die Drehzahlermittlung werden in diesem Fall in bevorzugter Weise die der Umfangsfrequenz proportionalen Signale zur Synchronisation der Zeitvorgaben und damit der Ableitung der Drehzahl verwendet.

### [Beispiele]

Anhand der Figuren wird an einem Ausführungsbeispiel die Erfindung noch näher erläutert.

Es zeigt:
- Fig. 1: ein Blockschaltbild eines Ausführungsbeispiels der Erfindung; und
- Fig. 2: Darstellungen zur Erläuterung des Betriebs des Ausführungsbeispiels.

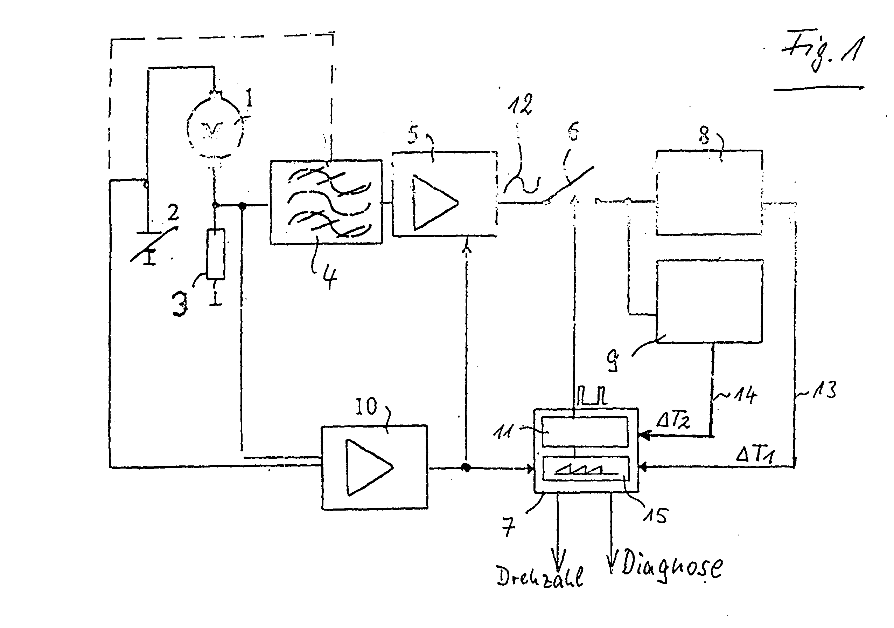

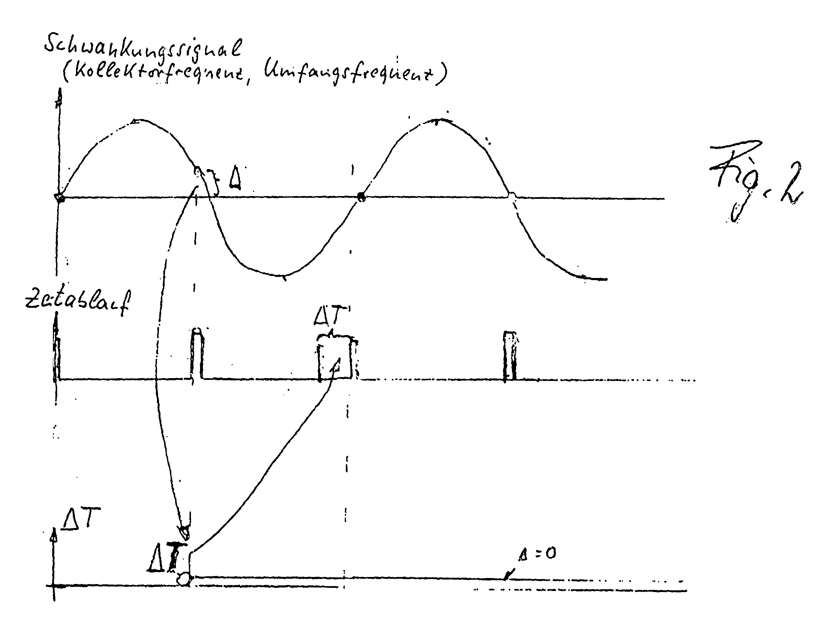

Im Ausführungsbeispiel wird ein Gleichstrom-Kommutatormotor 1 durch eine Spannungsquelle 2 (Gleichspannungsquelle) gespeist. Der Motorstrom kann z. B. durch einen Shunt 3 oder auch über eine Impedanz, wie es z. B. aus der DE-OS 23 10 739 bekannt ist, erfaßt werden. Ferner kann an einer Eingangsklemme des Motors, wie es strichliert dargestellt ist und aus der DE 32 34 683 A1 bekannt ist, eine Spannung, welche durch die Kommentierung entstandene Spitzen enthält, abgenommen werden. Das erfaßte Signal enthält die Ungenauigkeiten und Unregelmäßigkeiten, welche durch die Motoreigenschaften bedingt sind. Dieses Signal wird als Eingangssignal für die Drehzahlbestimmung verwendet. Das Eingangssignal kann vor der Auswertung in einer ein Bandpaßfilter und/oder Kondensator aufweisenden Aufbereitungsschaltung 4 gegebenenfalls von höherfrequenten Störungen und vom Gleichstromanteil befreit werden. In einem Verstärker 5 kann das aufbereitete Signal, insbesondere Stromschwankungssignal verstärkt und die Amplitude auf ein konstantes Maximum geregelt. Der Verstärkerausgang liefert ein entsprechendes elektrisches Schwankungssignal, insbesondere Stromschwankungssignal 12. Dieses aufbereitete und gegebenenfalls von Störungen und dem Gleichstromanteil befreite elektrische Schwankungssignal 12 (Fig. 2) wird mit bestimmten Zeitvorgaben über einen von einer Zeitsteuereinrichtung 7 gesteuerten Schalter 6 an eine Auswerteeinrichtung weitergeleitet, welche beim Ausführungsbeispiel der Fig.1 eine Phasenanalyse durchführt, wie im einzelnen noch erläutert wird.

Die Zeitvorgaben bzw. Zeitpunkte, in denen die Zeitsteuereinrichtung 7 den Schalter 6 zum Abtasten des Schwankungssignales für die Phasenanalyse ansteuert, werden grob aus der abgenommenen Motorspannung und dem erfaßten Motorstrom in einer Vorgabeschaltung 10 vorgegeben. Durch die Vorgabeschaltung 10 kann auch die Anstiegsgeschwindigkeit des Verstärkers 5 begrenzt werden, um eine frequenzproportionale Austiegsgeschwindigkeit des Schwankungssignals 12 zu erhalten. Hierdurch wird eine lineare Phasenmessung beim Auswerten der Amplituden insbesondere des Stromschwankungssignals möglich. Dieses Signal wird zu den vorgegebenen Zeitpunkten (Zeitvorgaben) bevorzugt im Hinblick auf die aus den Kommutatorwechseln resultierenden Schwankungen ausgewertet. Hierzu wird der Schalter 6 von der Zeitsteuereinrichtung 7 entsprechend angesteuert. Die Zeitsteuereinrichtung 7 enthält einen Oszillator 15, dessen Frequenz von Motorsignalen, wie Motorstrom, Motorspannung oder Motor-EMK grob vorbestimmt wird. Diese Frequenz entspricht mit Abweichung von ca. 15% der Motordrehzahl. Ferner beinhaltet die Zeitsteuereinrichtung 7 eine Ausgangsstufe 11, welche in Abhängigkeit von der Oszillatorfrequenz zu den bestimmten Zeitpunkten (Zeitvorgaben) Impulse (Zeitablauf in der Figur 2) liefert.

Dieser Zeitablauf wird phasenmäßig in Bezug gesetzt zum Schwankungssignal, welches die Kollektorfrequenz und/oder die Umfangsfrequenz des Motors enthalten kann.

Aus der Auswertung ergibt sich ein Stellsignal, welches zur Regelung der Zeitvorgaben, mit welcher die Zeitsteuereinrichtung 7 den Schalter 6 ansteuert, dient. Die Auswerteeinrichtung des Ausführungsbeispiels der Fig. 1 bildet einen Regelkreis, durch welchen die Ablaufzeit bzw. die Zeitvorgaben der Zeitsteuerschaltung 7 auf das elektrische Schwankungssignal 12 phasengenau synchronisiert wird. Diese angepaßte bzw. synchronisierte Frequenz ist das Maß für die Bestimmung der Drehzahl des Motors 1.

In der Figur 2 ist eine Darstellung des elektrischen Schwankungssignals gezeigt. Dieses kann die Kollektorfrequenz und/oder die Umfangsfrequenz des Motors enthalten. Jenachdem, welche dieser beiden Frequenzen bei der Phasenanalyse zugrundegelegt werden, ergibt sich ein entsprechendes Stellsignal ΔT, welches stellvertretend für ein Stellsignal ΔT1 bei der Kollektorfrequenz und/oder ΔT2 bei der Umfangsfrequenz ist.

Beim in der Figur 1 dargestellten Ausführungsbeispiel erfolgt in einer Auswerteeinrichtung, welche eine Phasenanalyseeinrichtung 8 für die Auswertung des auf der Kollektorfrequenz basierenden Schwankungssignals und eine Phasenanalyseeinrichtung 9 für die Auswertung des auf der Umfangsfrequenz beruhenden Schwankungssignals aufweist, ein Vergleich der Phasenlage des Schwankungssignals 12 mit den Zeitpunkten (Zeitvorgaben) des Zeitablaufs der Zeitsteuerschaltung 7 (Fig. 2). Das Schwankungssignal beinhaltet die Kollektorfrequenz und/oder die Umfangsfrequenz des Motors und der Kurvenverlauf dieses Signals ergibt sich aus den Kommutatorwechseln des Gleichstrommotors 1. In bevorzugter Weise werden die Nulldurchgänge dieses Signals mit den Zeitpunkten der Zeitvorgaben verglichen. Wenn eine Phasendifferenz zwischen einem erfaßten Nulldurchgang und einem entsprechenden Impuls der Zeitvorgabe vorhanden ist, wie es in Figur 2 dargestellt ist, erzeugt die Auswerteeinrichtung (Phasenanalyseeinrightung 8 und/oder Phasenanalyseeinrichtung 9) aufgrund dieses Vergleichs das Stellsignal ΔT, welches die Frequenz der Zeitvorgaben entsprechend ändert, wie es in der Figur 2 dargestellt ist. Diese Regelung der Frequenz der von der Zeitsteuereinrichtung 7 gelieferten Impulse wird phasengenau mit den Nulldurchgängen des Schwankungsmeßsignals, welches die Kollektorfrequenz und/oder die Umfangsfrequenz wiedergibt, synchronisiert. Bei Elektromotoren, die wenig Verschleißerscheinungen aufweisen, kann das auf der Kollektorfrequenz beruhende Schwankungssignal bei der Phasenanalyse in der Phasenanalyseeinrichtung 8 ausgewertet werden. Für die Synchronisation der Zeitvorgaben, bzw. des Zeitablaufs der Zeitsteuereinrichtung 7 wird über eine Leitung 13 das Stellsignal ΔT1 geliefert. Dieses beeinflußt in bevorzugter Weise die Frequenz des Oszillators 15, wodurch dann eine zeitliche bzw. phasenmäßige Verschiebung der nachfolgenden Impulse des Zeitverlaufs d. h. der Zeitvorgaben bewirkt wird, wie es in der Figur 2 dargestellt ist.

Wenn bei Elektromotoren, die schon länger in Betrieb sind, aufgrund von Verschleißerscheinungen an den Kollektoren und/oder Bürsten, eine exakte Positionsbestimmung bzw. Phasenbestimmung der Nulldurchgänge, d. h. der Kommutatorwechsel nicht mehr möglich ist, können in der zweiten Phasenanalyseeinrichtung 9, die auf den Ankerumfang bezogenen Schwankungen als Integral pro Motorumdrehung, z. B. die Summe der Kommutatorwechsel pro Motorumdrehung, erfaßt werden. Wenn bei der Erfassung der Umfangsfrequenz eine Phasendifferenz zu den entsprechenden Zeitvorgaben bzw. der Ablaufzeit der Zeitsteuereinrichtung 7 sich ergibt, wird das Stellsignal ΔT2 erzeugt, mit welchem die Frequenz der Zeitvorgaben so geregelt wird, daß eine phasengenaue Synchronisation zur Umlauffrequenz hergestellt wird. Die Auswertung mittels der zweiten Phasenanalyseeinrichtung 9 (Auswertung der Umfangsfrequenz) kann auch jederzeit anstelle oder zusammen mit der Auswertung der Kollektorfrequenz in der ersten Phasenanalyseeinrichtung 8 erfolgen.

Die dabei synchronisierte Frequenz ist ein Maß für die tatsächliche Drehzahl des Geleichstrommotors 1.

Ferner kann aus den Stellsignalen ΔT1 und ΔT2 eine Aussage über den Verschleiß von mechanischen Bauteilen des Gleichstrommotors gewonnen werden. Die bei der Auswertung des Schwankungssignals 12 gewonnenen Stellsignale ΔT1 und ΔT2 beinhalten eine Aussage über die Güte des Gleichstrommotors, insbesondere im Bereich seines Kollektors. Dies kann man zur Diagnose der Motorqualität verwenden.

Die Meßvorrichtung kann in Hardware oder durch Software verwirklicht werden.

Die gemessene Drehzahl kann für die verschiedensten Zwecke verwendet werden, beispielsweise als Ist-Wert bei der Motorsteuerung, insbesondere im Zusammenhang mit dem Vermeiden von unerwünschten Motordrehzahlen, die sich dann ergeben können, wenn der Motor ein schwingungsfähiges System beeinflußt. Aufgrund der exakt ermittelten Drehzahl können unerwünschte Resonanzen, die sich bei bestimmten Drehzahlen einstellen, im schwingungsfähigen System vermieden werden. Erreicht wird dies durch eine entsprechende, die Resonanzdrehzahlen ausblendende Motorsteuerung oder -regelung in Abhängigkeit von den ermittelten Motordrehzahlen.

### [Bezugszeichenliste]

- 1: Gleichstrom-Kommutatormotor
- 2: Gleichspannungsquelle
- 3: Shunt
- 4: Bandpaßfilter
- 5: Verstärker
- 6: Schalter
- 7: Zeitsteuereinrichtung
- 8: erste Phasenanalyseeinrichtung
- 9: zweite Phasenanalyseeinrichtung
- 10: Vorgabeschalung
- 11: Ausgangsstufe
- 12: Elektrisches Schwankungssignal
- 13: Leitung für Stellsignal ΔT1
- 14: Leitung für Stellsingal ΔT2
- 15: Oszillator

## Patentansprüche

1. Verfahren zur Messung der Drehzahl eines GleichstromKommutatormotors (1), bei dem durch Ansteuerung eines Schalters (6) in von einem Oszillator (15) bestimmten Zeitvorgaben ein die Kommutationswechsel des Motors aufweisendes elektrisches Schwankungssignal an eine Auswerteeinrichtung (8, 9) weitergeleitet wird, welche durch eine Phasenanalyse ein Stellsignal erzeuge, mit dem der von Motorsignalen grob in seiner Frequenz vorbestimmte Oszillator (15) in Frequenz und Phase mit dem Schwankungssignal synchronisiert wird, wobei aus der synchronisierten Oszillatorfrequenz die Zeitvorgaben und die Motordrehzahl bestimmt werden.

2. Verfahren nach Anspruch 1, **dadurch gekennzeichnet, daß** der Ankerumfang phasenmäßig erfaßt wird und die Zeitvorgaben nach der Umfangsfrequenz der Motordrehung synchronisiert werden.

3. Verfahren nach Anspruch 2, **dadurch gekennzeichnet, daß** der Ankerumfang als Summe der Kommutatorwechsel erfaßt wird.

4. Verfahren nach einem der Ansprüche 1 bis 3, **dadurch gekennzeichnet, daß** die Amplituden des elektrischen Schwankungssignals auf ein konstantes Maximum geregelt werden.

5. Verfahren nach Anspruch 1 oder 4, **dadurch gekennzeichnet, daß** die Anstiegsgeschwindigkeit der Amplitude des elektrischen Schwankungssignals bei der Verstärkung des Signals begrenzt wird.

6. Verfahren nach einem der Ansprüche 1 bis 5, **dadurch gekennzeichnet, daß** als elektrisches Schwankungssignal ein vom Motorstrom abgeleitetes Stromschwankungssignal verwendet wird.

7. Verfahren nach einem der Ansprüche 1 bis 6, **dadurch gekennzeichnet, daß** das Stellsignal und/oder das bei der Phasenerfassung des elektrischen Schwankungssignals gewonnene Signal für eine Motordiagnose verwendet wird.

8. Verfahren nach einem der Ansprüche 1 bis 7, **dadurch gekennzeichnet, daß** in Abhängigkeit von der ermittelten Drehzahl der Gleichstrommotor so gesteuert wird, daß bestimmte Drehzahlen, insbesondere Resonanzdrehzahlen eines vom Motor beeinflußten Systems ausgeblendet werden.

9. Vorrichtung zum Messen der Drehzahl eines Gleichstrom-Kommutatormotors mit einer Aufbereitungsschaltung (4, 5) zur Bildung eines die Kommutierungswechsel des Motors enthaltenden Schwankungssignals, einem Phasenregelkreis (8, 9, 13, 14, 15), welcher ein Oszillatorausgangssignal mit dem elektrischen Schwankungssignal in Phase und Frequenz synchronisiert, und einer einen Oszillator (15) aufweisenden Zeitsteuereinrichtung (7), welche in Abhängigkeit von den elektrischen Motorsignalen Vorgaben zur Betätigung eines Schalters (6) für die Zuleitung des elektrischen Schwankungssignals zum Phasenregelkreis liefert, wobei die Vorrichtung so ausgebildet ist, daß der Oszillator (15) der Zeitsteuereinrichtung (7) mit dem Schwankungssignal in Frequenz und Phase synchronisiert ist, der Betätigungsschalter (6) durch die synchronisierte Frequenz des Oszillators (15) gesteuert ist, und aus der synchronisierten Frequenz des Oszillators (15) ein Drehzahlproportionales Signal gebildet ist.

## Claims

1. A method of measuring the speed of rotation of a dc commutator motor (1) wherein an electrical fluctuation signal having the commutation changes of the motor is passed by actuation of a switch (6) at time settings determined by an oscillator (15) to an evaluation device (8, 9) which by phase analysis produces a control signal with which the oscillator (15) which is approximately predetermined in respect of its frequency by motor signals is synchronised in frequency and phase with the fluctuation signal, the time settings and the speed of motor rotation being determined from the synchronised oscillator frequency.

2. A method according to claim 1 **characterised in that** the armature circumference is detected in respect of phase and the time settings are synchronised in accordance with the circumferential frequency of the motor rotation.

3. A motor according to claim 2 **characterised in that** the armature circumference is detected as the sum of the commutator changes.

4. A method according to one of claims 1 to 3 **characterised in that** the amplitudes of the electrical fluctuation signal are regulated to a constant maximum.

5. A method according to claim 1 or claim 4 **characterised in that** the rise rate of the amplitude of the electrical fluctuation signal is limited upon amplification of the signal.

6. A method according to one of claims 1 to 5 **characterised in that** a current fluctuation signal derived from the motor current is used as the electrical fluctuation signal.

7. A method according to one of claims 1 to 6 **characterised in that** the control signal and/or the signal obtained in phase detection of the electrical fluctuation signal is used for a motor diagnostic procedure.

8. A method according to one of claims 1 to 7 **characterised in that** the dc motor is controlled in dependence on the ascertained speed of rotation in such a way that given speeds of rotation, in particular resonance speeds of rotation, of a system influenced by the motor are cut out.

9. A device for measuring the speed of rotation of a dc commutator motor comprising a processing circuit (4, 5) for forming a fluctuation signal containing the commutation changes of the motor, a phase regulating circuit (8, 9, 13, 14, 15) which synchronises an oscillator output signal with the electrical fluctuation signal in respect of phase and frequency, and a time control device (7) which has an oscillator (15) and which in dependence on the electrical motor signals provides settings for the actuation of a switch (6) for passing the electrical fluctuation signal to the phase regulating circuit, wherein the device is so designed that the oscillator (15) of the time control device (7) is synchronised with the fluctuation signal in respect of frequency and phase, the actuating switch (6) is controlled by the synchronised frequency of the oscillator (15) and that a rotary speed-proportional signal is formed from the synchronised frequency of the oscillator (15).

## Revendications

1. Procédé pour mesurer la vitesse de rotation d'un moteur à commutateur à courant continu (1), dans lequel par la commande d'un interrupteur (6), à des instants donnés déterminés par un oscillateur (15), un signal d'oscillation électrique présentant les changements de commutation du moteur est transmis à un dispositif d'analyse (8, 9) qui par une analyse de phase génère un signal de réglage, avec lequel l'oscillateur (15) grossièrement prédéterminé dans sa fréquence par des signaux de moteur est synchronisé en fréquence et en phase avec le signal d'oscillation, les instants donnés et la vitesse de rotation étant déterminés à partir de la fréquence d'oscillateur synchronisée.

2. Procédé selon la revendication 1, **caractérisé en ce qu'**une capture en phase est effectuée sur la périphérie de l'induit et **en ce que** les instants donnés sont synchronisés suivant la fréquence périphérique de la rotation du moteur.

3. Procédé selon la revendication 2, **caractérisé en ce que** la capture sur la périphérie de l'induit est effectuée en tant que somme des changements de commutateur.

4. Procédé selon l'une des revendications 1 à 3, **caractérisé en ce que** les amplitudes du signal d'oscillation électrique sont réglées à un maximum constant.

5. Procédé selon la revendication 1 ou 4, **caractérisé en ce que** la vitesse d'accroissement de l'amplitude du signal d'oscillation électrique est limitée lors de l'amplification du signal.

6. Procédé selon l'une des revendications 1 à 5, **caractérisé en ce qu'**un signal d'oscillation de courant déduit du courant de moteur est utilisé comme signal d'oscillation électrique.

7. Procédé selon l'une des revendications 1 à 6, **caractérisé en ce que** le signal de réglage et/ou le signal obtenu lors de la capture de phase du signal d'oscillation électrique est utilisé pour un diagnostic moteur.

8. Procédé selon l'une des revendications 1 à 7, **caractérisé en ce qu'**en fonction de la vitesse de rotation trouvée, le moteur à courant continu est commandé de telle façon que des vitesses de rotation déterminées, en particulier des vitesses de rotation de résonance d'un système asservi par le moteur, sont masquées.

9. Dispositif pour mesurer la vitesse de rotation d'un moteur à commutateur à courant continu présentant un circuit de traitement (4, 5) pour former un signal d'oscillation contenant les changements de commutation du moteur, une boucle de régulation en phase (8, 9, 13, 14, 15) qui synchronise en phase et en fréquence un signal de sortie d'oscillateur avec le signal d'oscillation électrique, et un dispositif de commande temporelle (7) comportant un oscillateur (15) qui, en fonction des signaux électriques de moteur fournit des données pour l'actionnement d'un commutateur (6) afin de transmettre le signal d'oscillation électrique à la boucle de régulation de phase, le dispositif étant constitué de telle façon que l'oscillateur (15) du dispositif de commande temporelle (7) soit synchronisé en fréquence et en phase avec le signal d'oscillation, que le commutateur d'actionnement (6) soit commandé par la fréquence synchronisée de l'oscillateur (15), et qu'un signal proportionnel à la vitesse de rotation soit formé à partir de la fréquence synchronisée de l'oscillateur (15).
